# EUROPÄISCHE PATENTSCHRIFT

(11) **EP 0 788 916 B1**
(45) Veröffentlichungstag und Bekanntmachung des Hinweises auf die Patenterteilung: **22.03.2000**
(21) Anmeldenummer: 96112103.5
(22) Anmeldetag: 26.07.1996
(51) Int. Cl.: B60K 15/04, B60K 15/035

(54) **Kraftstoffbehälter für Fahrzeuge, insbesondere Personenkraftwagen**
Fuel tank for vehicles, especially for passenger cars
Réservoir de carburant pour véhicules, en particulier pour voitures automobiles

(30) Priorität: 07.09.1995 DE 19532988
(43) Veröffentlichungstag der Anmeldung: 13.08.1997
(73) Patentinhaber: Dr.Ing.h.c. F. Porsche Aktiengesellschaft, 70435 Stuttgart (DE)
(72) Erfinder: Doll, Dieter, 71106 Magstadt (DE); Essig, Ulrich, 73240 Wendlingen (DE)

(56) Entgegenhaltungen:
- EP-A- 0 067 652
- WO-A-91/11342
- DE-C- 3 243 833
- US-A- 4 394 925
- US-A- 5 201 547
- US-A- 5 373 957

## Beschreibung

Die Erfindung bezieht sich auf einen Kraftstoffbehälter für Fahrzeuge, insbesondere Personenkraftwagen, gemäß dem Oberbegriff des Patentanspruchs 1.

Die EP 0 067 652 A1 zeigt einen Kraftstoffbehälter für Fahrzeuge, insbesondere Personenkraftwagen, mit einem Einfüllstutzen, der im Bereich seines Anschlusses an den Kraftstoffbehälter um den oberen Rand eines angrenzenden Hohlträgers hinweggeführt ist und eine seitliche Kraftstoffbehälterwand durchdringt, wobei ein Teilbereich des Einfüllstutzens in den Behälterinnenraum hineinragt.

Bedingt durch die Höhenerstreckung des angrenzenden aufbauseitigen Hohlträgers ist der um den oberen Rand des Hohlträgers herumgeführte Einfüllstutzen relativ hochliegend an den Kraftstoffbehälter angeschlossen.

Das nur geringfügig in den Behälterinnenraum hineinragende Ende des rohrförmigen Einfüllstutzens definiert mit dem höchsten Punkt, an dem verdrängte Luft austreten kann, die maximale Füllhöhe H des Kraftstoffbehälters. Die maximale Füllhöhe H liegt bei dieser Anordnung relativ nahe an der oberen Kraftstoffbehälterwand und zwar oberhalb des oberen Randes des aufbauseitigen Hohlträgers, so daß oberhalb der maximalen Füllhöhe nur ein relativ kleines Ausdehnungsvolumen vorhanden ist. Um eine einwandfreie Funktion des Kraftstoffbehälters und ein Austreten von Kraftstoff insbesondere bei hohen Temperaturen und/oder Schräglage des Fahrzeugs zu vermeiden, ist jedoch ein Ausdehnungsvolumen erfoderlich, das etwa 10% des gesamten Behälterinnenraumes beträgt.

Aufgabe der Erfindung ist es, an einem benachbart einem relativ hochliegenden Karosserie - oder Fahrwerksteil angeordneten, mit einem Einfüllstutzen versehenen Kraftstoffbehälter solche Vorkehrungen zu treffen, daß die maximale Füllhöhe unter den oberen Rand des angrenzenden Karosserie- oder Fahrwerksteils abgesenkt werden kann und somit ein ausreichendes Ausdehnungsvolumen des Kraftstoffbehälters sichergestellt ist.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das nach unten ziehen einer Betankungsentlüftung und des freien in den Behälterinnenraum ragenden Endes des Einfüllstutzens unterhalb das Niveau des oberen Randes des angrenzenden Karosserie - oder Fahrwerkteils das maximale Füllniveau abgesenkt werden kann, so daß auch bei diesen ungünstigen Bedingungen ein Ausdehnungsvolumen von etwa 10% des Behältervolumens sichergestellt ist. Der Einfüllstutzen kann fest mit dem Kraftstoffbehälter verbunden sein. Vorteilhafterweise ist der Einfüllstutzen als gesteckter Einfüllstutzen ausgebildet, d.h. er wird erst nachträglich in den bereits montierten Kraftstoffbehälter eingesteckt. Zu diesem Zweck ist der Kraftstoffbehälter mit einem Aufnahmestutzen versehen, der über einen Kragen an der Außenseite des Kraftstoffbehälters festgelegt ist. Der Aufnahmestutzen umfaßt einen außenliegenden ersten Abschnitt mit einem daran befestigten Dichtelement, das mit dem hindurchgeführten Einfüllstutzen zusammenwirkt.
Der relativ weit in den Behälterinnenraum ragende zweite Abschnitt des Aufnahmestutzens ist mit einem bogenförmigen Abschnitt schräg nach unten gezogen und dient als Führung für den innenliegenden Einfüllstutzen. Im Bereich des Aufnahmestutzens weist der Einfüllstutzen zumindest abschnittsweise einen flexiblen Abschnitt auf, der durch ein Wellrohr oder ein Gummiteil gebildet wird. Der flexible Abschnitt kann durch ein Endstück oder ein Zwischenstück gebildet werden, das an einen geradlinigen Abschnitt des Einfüllstutzens angeschlossen ist. Der Einfüllstutzen weist im Ausgangszustand (Anlieferungszustand) eine geradlinige Form auf und nimmt erst beim Einstecken in den außenliegenden Aufnahmestutzen einen gebogenen Formverlauf ein. Vorteilhafterweise ist eine innenliegende Betankungsentlüftung für den Einfüllstutzen vorgesehen, wodurch die Montage erleichtert, die Emission verringert und die Kosten reduziert werden.
Bei der innenliegenden Betankungsentlüftung verläuft das Entlüftungsrohr innerhalb des Einfüllstutzens und es weist abschnittsweise ebenfalls einen flexiblen Abschnitt auf.
Die Absenkung der maximalen Füllhöhe H des Kraftstoffbehälters funktioniert jedoch auch bei einer außenliegenden Betankungsentlüftung. Der höchste Punkt der Betankungsentlüftung, an dem verdrängte Luft austreten kann, definiert die maximale Füllhöhe des Kraftstoffbehälters. Der Einfüllstutzen ist so weit nach unten geführt, daß er höchstens dieses Niveau erreicht oder tiefer liegt.

Der Einfüllstutzen überragt den Aufnahmestutzen in Richtung Behälterinnenraum. Durch unterschiedliche Längen des Einfüllstutzens bzw. der Betankungsentlüftung lassen sich bei identischen Kraftstoffbehältern unterschiedliche maximale Füllhöhen realisieren (z.B. kleines Auto - kleiner Tankinhalt).
Durch das nach unten ziehen des Einfüllstutzens und der Betankungsentlüftung lassen sich alle Füllhöhen auf Höhe der Eintrittsstelle des Einfüllstutzens und unterhalb realisieren.

Ein Ausführungsbeispiel der Erfindung ist in der Zeichnung dargestellt und wird im folgenden näher erläutert:

Es zeigt
- Fig. 1: einen Vertikalschnitt durch einen Kraftstoffbehälter mit einem Einfüllstutzen, einer inneren Betankungsentlüftung und einem angrenzenden Karosserie- oder Fahrwerksteil,
- Fig. 2: einen weiteren Vertikalschnitt entsprechend Fig. 1 mit einer äußeren Betankungsentlüftung,
- Fig. 3: einen Vertikalschnitt durch einen Kraftstoffbehälter mit einem gesteckten Einfüllstutzen, einer inneren Betankungsentlüftung und einen angrenzenden Karosserie- oder Fahrwerksteil und
- Fig. 4: einen weiteren Vertikalschnitt entsprechend Fig. 3 mit einer äußeren Betankungsentlüftung.

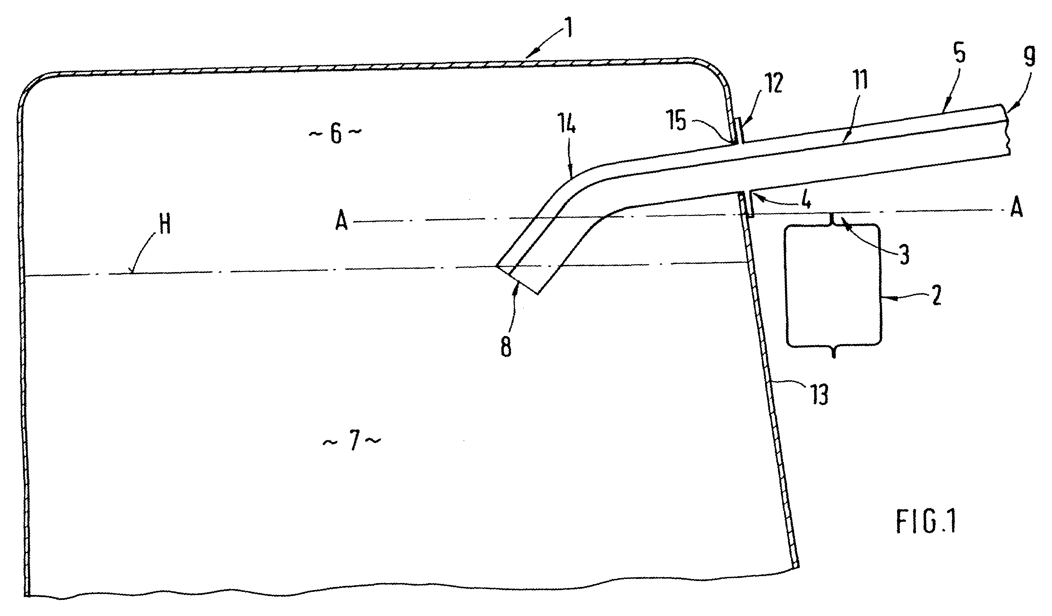

In den Figuren 1 bis 4 ist jeweils ein oberer Teilbereich eines Kraftstoffbehälters 1 für ein Fahrzeug, insbesondere für einen Personenkraftwagen dargestellt, der in Kunststoff- oder Blechbauweise ausgebildet ist. Der Kraftstoffbehälter 1 ist in nicht näher dargestellter Weise über herkömmliche Befestigungselemente am Aufbau in Lage gehalten. Angrenzend an den Kraftstoffbehälter 1 erstreckt sich ein Karosserie- oder Fahrwerksteil 2, dessen oberer Rand 3 eine horizontale Ebene A-A definiert. Im Ausführungsbeispiel wird das Karosserie- oder Fahrwerksteil 2 durch einen längsgerichteten Hohlträger gebildet.
Aufgrund der Höhenerstreckung des Hohlträgers verläuft die Eintrittsstelle 4 eines Einfüllstutzens 5 relativ hochliegend am Kraftstoffbehälter 1.
Um bei diesen ungünstigen räumlichen Verhältnissen ein ausreichendes Ausdehnungsvolumen 6 (etwa 10% des Volumens des gesamten Behälterinnenraumes 7) oberhalb der maximalen Füllhöhe H sicherszustellen, ist vorgesehen, daß sich das in den Behälterinnenraum 7 ragende Ende 8 des Einfüllstutzens 5 und eine Betankungsentlüftung 9, 10 unterhalb einer durch den oberen Rand 3 des angrenzenden Karosserie- oder Fahrwerksteiles 2 definierten Ebene A-A erstrecken. Die maximale Füllhöhe H wird durch den höchsten Punkt des freien Endes der im Behälterinnenraum 7 liegenden Betankungsentlüftung 9, 10 festgelegt. Das freie Ende 8 des Einfüllstutzens 5 verläuft höchstens auf dem Niveau der Füllhöhe H oder tieferliegend.
Durch das nach unten ziehen der Betankungsentlüftung 9, 10 und des freien Endes 8 des Einfüllstutzens 5 innerhalb des Kraftstoffbehälters 1 kann die maximale Füllhöhe H unter die Ebene A-A abgesenkt werden.
Der höchste Punkt des lichten Durchtrittsquerschnittes des freien Endes 8 des Einfüllstutzens 5 verläuft also höchstens auf dem Niveau der Füllhöhe H oder tieferliegend.

Fig. 1 zeigt einen Kraftstoffbehälter mit einem daran befestigten Einfüllstutzen 5 und einer innenliegenden Betankungsentlüftung 9, d.h. ein Entlüftungsrohr 11 der Betankungsentlüftung 9 verläuft innerhalb des Einfüllstutzens 5 und zwar in einem oberen Bereich desselben.
Der Einfüllstutzen 5 ist mittels eines radialen Kragens 12 an der Außenseite einer seitlichen Kraftstoffbehälterwand 13 durch Schweißen, Kleben oder dergleichen befestigt und ragt mit einem Abschnitt 14 durch eine Öffnung 15 der Kraftstoffbehälterwand 13 in den Behälterinnenraum 7 hinein.
Der winkelförmig oder bogenförmig ausgebildete Abschnitt 14 ist mit seinem freien Ende 8 nach unten hin gerichtet und zwar in Richtung Boden des Kraftstoffbehälters 1. Im Ausführungsbeispiel setzt sich der Abschnitt 14 aus zwei winkelförmig aneinandergesetzten Bereichen zusammen, die über einen gebogenen Übergangsbereich aneinander angeschlossen sind.

Die freien Enden der Betankungsentlüftung 9 und des Einfüllstutzens 5 liegen unterhalb der Ebene A-A, wobei die maximale Füllhöhe H durch den höchsten Punkt, aus dem verdrängte Luft durch das Entlüftungsrohr 11 entweichen kann, festgelegt ist. Das freie Ende 8 des Einfüllstutzens 5 liegt hier etwas tiefer als die maximale Füllhöhe H.

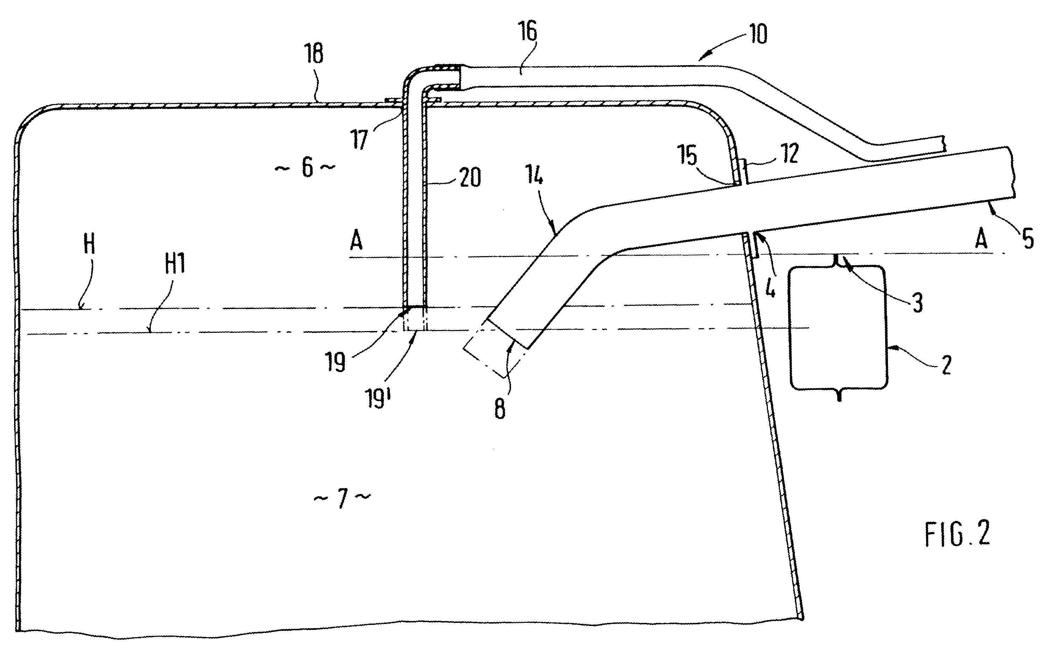

Fig. 2 unterscheidet sich von Fig. 1 dadurch, daß eine außenliegende Betankungsentlüftung 10 vorgesehen ist. Ein Entlüftungsrohr 16 verläuft hier außerhalb des Einfüllstutzens 5, und ist durch eine Öffnung 17 der oberen Kraftstoffbehälterwand 18 in den Behälterinnenraum 7 geführt. Das untere, horizontal verlaufende Ende 19 des in den Behälterinnenraum ragenden Abschnitts 20 des Entlüftungsrohres 16 definiert die maximale Füllhöhe H, die auch hier unterhalb der Ebene A-A liegt. Das freie Ende 8 des Einfüllstutzens 5 liegt geringfügig tiefer als die Ebene A-A.

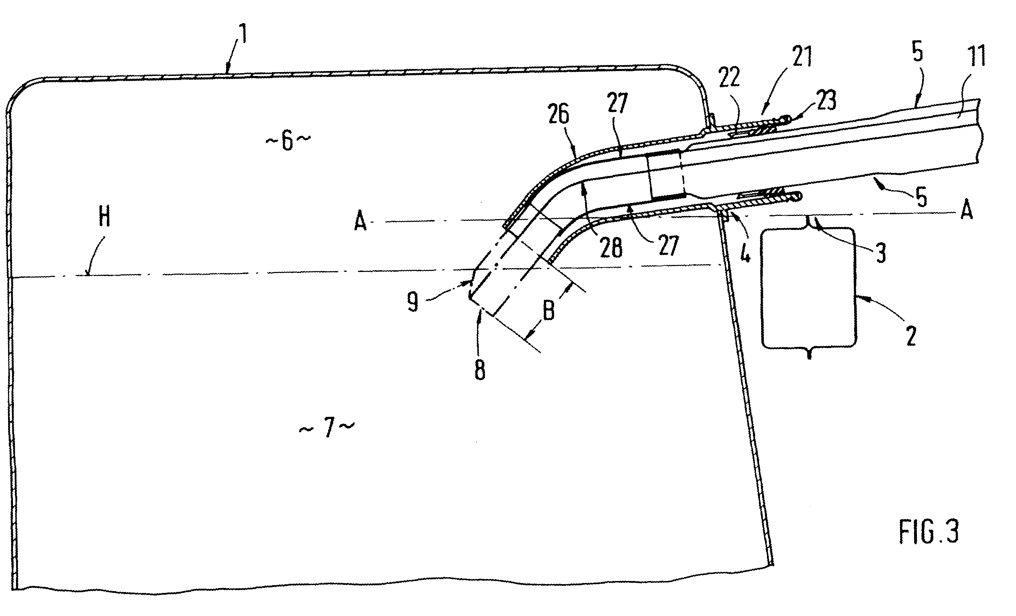

Eine besonders vorteilhafte Art der Ausgestaltung zeigt Fig. 3. Hier ist der Einfüllstutzen 5 als "gesteckter Einfüllstutzen" ausgebildet, d.h. er wird nachträglich am Fahrzeug bei bereits eingebautem Kraftstoffbehälter 1 montiert. Bei dieser Anordnung ist ebenfalls eine innenliegende Betankungsentlüftung 9 vorgesehen.

Bei gestecktem Einfüllstutzen ist am Kraftstoffbehälter 1 ein rohrförmiger Aufnahmestutzen 21 angeordnet, durch den der Einfüllstutzen 5 bereichsweise hindurchgeführt ist. Der Einfüllstutzen 5 überragt den Aufnahmestutzen 21 innerhalb des Behälterinnenraumes 7 um ein Maß B.
Zwischen Einfüllstutzen 5 und Aufnahmestutzen 21 ist ein Dichtelement 22 vorgesehen, welches gemäß dem Ausführungsbeispiel am Aufnahmestutzen 21 in Lage gehalten ist. Das Dichtelement 22 ist auf einen wellenförmigen Aufnahmeabschnitt eines inneren zylindrischen Schenkels einer Hülse 23 aufgesteckt. Ein äußerer Schenkel der Hülse 23 ist um das freie Ende des außenliegenden Aufnahmestutzens 21 herumgeführt und über eine Bördelverbindung 24 mit dem Aufnahmestutzen 21 verbunden.
Der außerhalb des Kraftstoffbehälters 1 liegende Abschnitt des Aufnahmestutzens 21 stützt sich über einen radialen Kragen 25 an der Außenseite des Kraftstoffbehälters 1 ab und ist dort befestigt. Angrenzend an den Kragen 25 weist der Aufnahmestutzen 21 einen zweiten, innerhalb des Kraftstoffbehälters 1 sich erstreckenden nach unten weisenden, gebogenen Führungsabschnitt 26 auf.
Der Einfüllstutzen 5 ist im Bereich des bogenförmigen oder winkelförmigen Führungsabschnitts 26 wenigstens abschnittsweise mit einem flexiblen Abschnitt 27 versehen.
Bei innenliegender Betankungsentlüftung 9 weist auch das innerhalb des Einfüllstutzens 5 verlaufende Entlüftungsrohr 11 abschnittsweise einen flexiblen Abschnitt 28 auf.
Die flexiblen Abschnitte 27, 28 von Einfüllstutzen 5 und Entlüftungsrohr 11 werden jeweils durch ein biegsames Wellrohr (z.B. aus PA) oder ein biegsames Gummiteil gebildet.

Die flexiblen Abschnitte 27, 28 bilden gemäß Fig. 3 Zwischenstücke des Einfüllstutzens 5 und des Entlüftungsrohres 11. Die Zwischenstücke verbinden geradlinige Abschnitte des Einfüllstutzens 5 bzw. des Entlüftungsrohres 11 mit geradlinigen, kurzen Endstücken des Einfüllstutzens 5 bzw. des Entlüftungsrohres 11. Es besteht aber auch die Möglichkeit, daß die flexiblen Abschnitte 27, 28 Endbereiche des Einfüllstutzens 5 bzw. des Entlüftungsrohres 11 bilden.

Der Einfüllstutzen 5 bzw. das Entlüftungsrohr 11 weisen im Anlieferungszustand einen geraden Formverlauf auf. Erst beim Einführen in den Kraftstoffbehälter 1 werden der Einfüllstutzen 5 und das Entlüftungsrohr 11 durch den außenliegenden Führungsabschnitt 26 des Aufnahmestutzens 21 nach unten gebogen und weisen zumindest abschnittsweise einen gebogenen Formverlauf auf.
Die maximale Füllhöhe H wird gemäß Fig. 3 durch den höchsten Punkt der innerhalb des Behälterinnenraumes 7 angeordneten inneren Betankungsentlüftung 9 definiert.

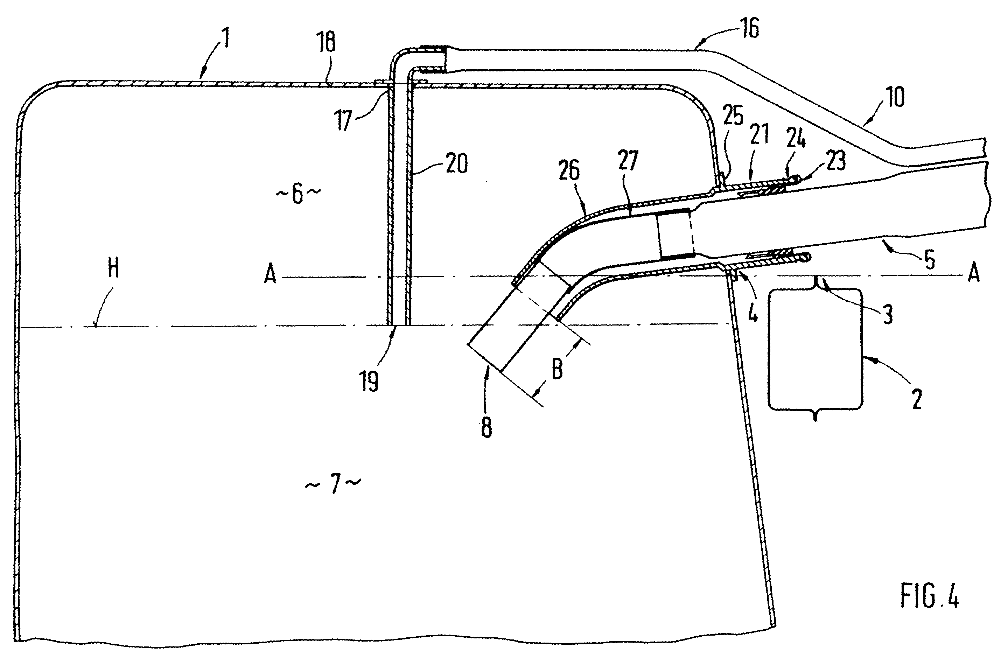

Fig. 4 ist im wesentlichen identisch mit Fig. 3, lediglich anstelle der innenliegenden Betankungsentlüftung 9 ist eine äußere Betankungsentlüftung 10 gem. Fig. 2 vorgesehen.

Durch unterschiedliche Ausbildung der Betankungsentlüftung 9, 10 (Länge des Entlüftungsrohres) und des Einfüllstutzens 5 lassen sich bei gleichem Kraftstoffbehälter 1 unterschiedliche maximale Füllhöhen H realisieren (z.B. kleines Auto - kleiner Kraftstoffbehälter).

Durch Verlängerung des Abschnitts 20 des Entlüftungsrohres 10 nach unten hin und Verlängerung des Einfüllstutzens 5, läßt sich die Füllhöhe in Fig. 2 von H auf H1 absenken. Die Verlängerungen sind jeweils strichpunktiert dargestellt.

## Patentansprüche

1. Kraftstoffbehälter für Fahrzeuge, insbesondere Personenkraftwagen, mit einem Einfüllstutzen, der im Bereich eines Anschlusse an den Kraftstoffbehälter um den oberen Rand eines an den Kraftstoffbehälter angrenzenden Karosserie- oder Fahrwerksteiles hinweggeführt ist und eine seitliche Kraftstoffbehälterwand durchdringt, wobei ein Teilbereich des Einfüllstutzens in den Behälterinnenraum hineinragt, dadurch gekennzeichnet, daß sich das in den Behälterinnenraum (7) ragende Ende (8) des Einfüllstutzens (5) und eine Betankungslüftung (9, 10) unterhalb einer durch den oberen Rand (3) des angrenzenden Karosserie- oder Fahrwerksteiles (2) definierten Ebene (A-A) erstrecken, wobei die maximale Füllhöhe H durch den höchsten Punkt der im Behälterinnenraum (7) liegenden Betankungsentlüftung (9, 10) festlegbar ist und daß das freie Ende (8) des Einfüllstutzens (5) höchstens auf dem Niveau der Füllhöhe H oder tieferliegend verläuft.

2. Kraftstoffbehälter nach Anspruch 1, dadurch gekennzeichnet, daß der höchste Punkt des lichten Durchtrittsquerschnittes des freien Ende (8) des Einfüllstutzens (5) auf dem Niveau der Füllhöhe H oder tieferliegend angeordnet ist.

3. Kraftstoffbehälter nach Anspruch 1, dadurch gekennzeichnet, daß eine innenliegende Betankungsentlüftung (9) vorgesehen ist.

4. Kraftstoffbehälter nach Anspruch 1, dadurch gekennzeichnet, daß eine außenliegende Betankungsentlüftung (10) angeordnet ist.

5. Kraftstoffbehälter nach Anspruch 1, dadurch gekennzeichnet, daß der Einfüllstutzen (5) am Kraftstoffbehälter (1) festgelegt ist und mit einem nach unten gerichteten winkelförmigen oder bogenförmigen Abschnitt (14) in den Behälterinnenraum (7) hineinragt.

6. Kraftstoffbehälter nach Anspruch 1, dadurch gekennzeichnet, daß der Einfüllstutzen (5) in einen rohrförmigen Aufnahmestutzen (21) des Kraftstoffbehälters (1) eingesteckt ist, wobei zwischen Aufnahmestutzen (21) und Einfüllstutzen (5) ein Dichtelement (22) angeordnet ist, und daß der Einfüllstutzen (5) den Aufnahmestutzen (21) um ein Maß B überragt.

7. Kraftstoffbehälter nach Anspruch 6, dadurch gekennzeichnet, daß das Dichtelement (22) am Aufnahmestutzen (21) in Lage gehalten ist.

8. Kraftstoffbehälter nach Anspruch 7, dadurch gekennzeichnet, daß das Dichtelement (22) mit einem wellenförmigen Aufnahmeabschnitt auf einen inneren Schenkel einer Hülse (23) aufgesteckt ist und daß ein äußerer Schenkel der Hülse (23) über eine Bördelverbindung (24) mit dem Aufnahmestutzen (21) verbunden ist.

9. Kraftstoffbehälter nach einem oder mehreren der vorangegangenen Ansprüche, dadurch gekennzeichnet, daß ein außerhalb des Kraftstoffbehälters (1) liegender Abschnitt des Aufnahmestutzens (21) über einen radialen Kragen (25) an der Außenseite des Kraftstoffbehälters (1) festgelegt ist und daß der Aufnahmestutzen (21) einen zweiten innerhalb des Kraftstoffbehälters verlaufenden, nach unten weisenden Führungsabschnitt (26) aufweist.

10. Kraftstoffbehälter nach einem oder mehreren der vorangegangenen Ansprüche, dadurch gekennzeichnet, daß zumindest der Einfüllstutzen (5) im Bereich des bogenförmigen oder winkelförmigen Führungsabschnitts (26) wenigstens abschnittsweise einen flexiblen Abschnitt (27) aufweist.

11. Kraftstoffbehälter nach Anspruch 10, dadurch gekennzeichnet, daß sowohl der Einfüllstutzen (5) als auch das innerhalb des Einfüllstutzens (5) angeordnete Entlüftungsrohr (11) der innenliegenden Betankungsentlüftung (9) abschnittsweise einen flexiblen Abschnitt (27, 28) aufweisen.

12. Kraftstoffbehälter nach den Ansprüchen 10 und 11, dadurch gekennzeichnet, daß die flexiblen Abschnitte (27, 28) von Einfüllstutzen (5) und/oder Entlüftungsrohr (11) jeweils durch ein biegsames Wellrohr oder ein biegbares Gummiteil gebildet werden.

13. Kraftstoffbehälter nach den Ansprüchen 10 bis 12, dadurch gekennzeichnet, daß die flexiblen Abschnitte (27, 28) Endbereiche oder Zwischenstücke des Einfüllstutzens (5) bzw. des Entlüftungsrohres (11) bilden.

14. Kraftstoffbehälter nach einem oder mehreren der vorangegangenen Ansprüche, dadurch gekennzeichnet, daß bei gleichem Kraftstoffbehälter (1) und unterschiedlicher Ausbildung der Betankungsentlüftung (9, 10) und des Einfüllstutzens (5) unterschiedliche maximale Füllhöhen (H) realisierbar sind.

15. Kraftstoffbehälter nach einem oder mehreren der vorangegangenen Ansprüche, dadurch gekennzeichnet, daß der Einfüllstutzen (5) und das innenliegende Entlüftungsrohr (11) im Ausgangszustand geradlinig ausgerichtet sind und daß beim Einstecken des Einfüllstutzens (5) in den Aufnahmestutzen (21) durch den formsteifen Führungsabschnitt (26) der Einfüllstutzen (5) und das innenliegende Entlüftungsrohr (11) abschnittsweise einen gebogenen Formverlauf einnehmen.

## Claims

1. A fuel tank for vehicles, in particular passenger cars, with a filler pipe passing in the region of a connexion to the fuel tank around the upper edge of a part of the bodywork or the chassis adjacent to the fuel tank and passing through a lateral wall of the fuel tank, wherein a partial area of the filler pipe projects into the interior of the tank, **characterized in that** the end (8) of the filler pipe (5) projecting into the interior (7) of the tank and a refuelling vent (9, 10) extend below a plane (**A-A**) defined by the upper edge (3) of the adjacent part (2) of the bodywork or the chassis, wherein the maximum filling level **H** can be set by the highest point of the refuelling vent (9, 10) situated in the interior (7) of the tank, and the free end (8) of the filler pipe (5) extends no higher than than the level of the filling level **H** or at a lower level.

2. A fuel tank according to Claim 1, **characterized in that** the highest point of the internal through cross-section of the free end (8) of the filler pipe (5) is situated at the level of the filling level **H** or at a lower level.

3. A fuel tank according to Claim 1, **characterized in that** a refuelling vent (9) situated on the inside is provided.

4. A fuel tank according to Claim 1, **characterized in that** a refuelling vent (10) situated on the outside is provided.

5. A fuel tank according to Claim 1, **characterized in that** the filler pipe (5) is secured to the fuel tank (1) and projects into the interior (7) of the tank with an angled or arcuate portion (14) directed downwards.

6. A fuel tank according to Claim 1, **characterized in that** the filler pipe (5) is inserted into a tubular receiving pipe (21) of the fuel tank (1), wherein a sealing member (22) is arranged between the receiving pipe (21) and the filler pipe (5), and the filler pipe (5) projects beyond the receiving pipe (21) by an amount **B**.

7. A fuel tank according to Claim 6, **characterized in that** the sealing member (22) is held in position on the receiving pipe (21).

8. A fuel tank according to Claim 7, **characterized in that** the sealing member (22) is mounted with a corrugated receiving portion on an inner arm of a sleeve (23), and an outer arm of the sleeve (23) is connected to the receiving pipe (21) by way of a flanged-over connexion (24).

9. A fuel tank according to one or more of the preceding Claims, **characterized in that** a portion of the receiving pipe (21) situated outside the fuel tank (1) is secured to the outside of the fuel tank (1) by way of a radial collar (25), and the receiving pipe (21) has a second guide portion (26) extending inside the fuel tank and directed downwards.

10. A fuel tank according to one or more of the preceding Claims, **characterized in that** at least the filler pipe (5) has at least in part a flexible portion (27) in the region of the arcuate or angled guide portion (26).

11. A fuel tank according to Claim 10, **characterized in that** both the filler pipe (5) and the ventilating pipe (11) - arranged inside the filler pipe (5) - of the refuelling vent (9) situated on the inside have in part a flexible portion (27, 28).

12. A fuel tank according to Claims 10 and 11, **characterized in that** the flexible portions (27, 28) of the filler pipe (5) and/or the ventilating pipe (11) are formed in each case by a flexible corrugated pipe or a flexible rubber part.

13. A fuel tank according to Claims 10 to 12, **characterized in that** the flexible portions (27, 28) form end areas or intermediate members of the filler pipe (5) and the ventilating pipe (11) respectively.

14. A fuel tank according to one or more of the preceding Claims, **characterized in that** different maximum filling levels (**H**) can be achieved with the same fuel tank (1) and a different design of the refuelling vent (9, 10) and the filler pipe (5).

15. A fuel tank according to one or more of the preceding Claims, **characterized in that** the filler pipe (5) and the ventilating pipe (11) situated on the inside are orientated in a rectilinear manner in the initial state, and when the filler pipe (5) is inserted into the receiving pipe (21) through the dimensionally rigid guide portion (26) the filler pipe (5) and the ventilating pipe (11) situated on the inside assume in part a curved shape.

## Revendications

1. Réservoir de carburant pour véhicules, notamment pour voitures de tourisme, comportant une tubulure de remplissage qui, dans la région d'un raccord au réservoir de carburant, est guidée autour du bord supérieur d'un élément de la carrosserie ou d'un élément du châssis adjacent au réservoir de carburant, et traverse une paroi latérale du réservoir de carburant, une zone partielle de la tubulure de remplissage pénétrant dans le volume intérieur du réservoir, caractérisé en ce que l'extrémité (8) de la tubulure de remplissage (5), qui pénètre dans le volume intérieur (7) du réservoir, et une purge d'air de ravitaillement (9, 10) s'étendent au-dessous d'un plan (A-A) défini par le bord supérieur (3) de l'élément de carrosserie ou de l'élément de châssis (2) adjacent, la hauteur de remplissage maximale (H) pouvant être fixée par le point le plus haut de la prise d'air de ravitaillement (9, 10) qui se situe dans le volume intérieur (7) du réservoir et en ce que l'extrémité libre (8) de la tubulure de remplissage (5) s'étend au maximum au niveau de la hauteur de remplissage (H) ou plus bas.

2. Réservoir de carburant selon la revendication 1, caractérisé en ce que le point le plus haut de la section utile de passage de l'extrémité libre (8) de la tubulure de remplissage (5) se situe au niveau de la hauteur de remplissage (H) ou plus bas.

3. Réservoir de carburant selon la revendication 1, caractérisé en ce qu'il est prévu une purge d'air de ravitaillement (9) située à l'intérieur.

4. Réservoir de carburant selon la revendication 1, caractérisé en ce qu'il est prévu une purge d'air de ravitaillement (10) située à l'extérieur.

5. Réservoir de carburant selon la revendication 1, caractérisé en ce que la tubulure de remplissage (5) est fixée au réservoir de carburant (1) et pénètre dans le volume intérieur (7) du réservoir, par une section (14) coudée ou en arc, dirigée vers le bas.

6. Réservoir de carburant selon la revendication 1, caractérisé en ce que la tubulure de remplissage (5) est introduite dans une tubulure de réception (21) tubulaire du réservoir de carburant (1), un élément d'étanchéité étant disposé entre la tubulure de réception (21) et la tubulure de remplissage (5) et en ce que la tubulure de remplissage (5) dépasse de la tubulure de réception (21) d'une cote B.

7. Réservoir de carburant selon la revendication 6, caractérisé en ce que l'élément d'étanchéité (22) est immobilisé sur la tubulure de réception (21).

8. Réservoir de carburant selon la revendication 7, caractérisé en ce que l'élément d'étanchéité (22) est emboîté, par une section de réception ondulée, sur une branche intérieure d'un manchon (23) et en ce qu'une branche extérieure du manchon (23) est reliée à la tubulure de réception (21), par un sertissage (24).

9. Réservoir de carburant selon une ou plusieurs des revendications précédentes, caractérisé en ce qu'une section de la tubulure de réception (21), située à l'extérieur du réservoir de carburant (1), est fixée au côté extérieur du réservoir de carburant (1) par un collet radial (25) et en ce que la tubulure de réception (21) présente une deuxième section de guidage (26) s'étendant à l'intérieur du réservoir de carburant et dirigée vers le bas.

10. Réservoir de carburant selon une ou plusieurs des revendications précédentes, caractérisé en ce qu'au moins la tubulure de remplissage (5) présente au moins par endroits une section flexible (27), dans la région de la section de guidage (26) arquée ou coudée.

11. Réservoir de carburant selon la revendication 10, caractérisé en ce que la tubulure de remplissage (5) comme le tube de purge d'air (11), disposé à l'intérieur de la tubulure de remplissage (5), de la purge d'air de ravitaillement (9), présentent par endroits une section flexible (27, 28).

12. Réservoir de carburant selon les revendications 10 et 11, caractérisé en ce que les sections flexibles (27, 28) de la tubulure de remplissage (5) et/ou du tube de purge d'air (11) sont formées chacune par un tube ondulé flexible ou un élément en caoutchouc flexible.

13. Réservoir de carburant selon les revendications 10 à 12, caractérisé en ce que les sections flexibles (27, 28) forment des zones terminales ou des pièces intermédiaires de la tubulure de remplissage (5) et du tube de purge d'air (11).

14. Réservoir de carburant selon une ou plusieurs des revendications précédentes, caractérisé en ce que dans le cas d'un même réservoir de carburant (1) et d'une réalisation différente de la purge d'air de ravitaillement (9, 10) et de la tubulure de remplissage (5), on peut réaliser des hauteurs de remplissage maximales (H) différentes.

15. Réservoir de carburant selon une ou plusieurs des revendications précédentes, caractérisé en ce que la tubulure de remplissage (5) et le tube de purge d'air (11) situé à l'intérieur sont orientés en ligne droite à l'état initial et en ce que lorsque l'on introduit la tubulure de remplissage (5) dans la tubulure de réception (21), du fait de la section de guidage (26) rigide, la tubulure de remplissage (5) et le tube de purge d'air (11) situés à l'intérieur prennent par endroits une forme arquée.
